# FASCICULE DE BREVET EUROPEEN

(11) **EP 0 839 231 B1**
(45) Date de publication et mention de la délivrance du brevet: **21.05.2003**
(21) Numéro de dépôt: 96925785.6
(22) Date de dépôt: 15.07.1996
(51) Int. Cl.: E02B 7/22, E02B 3/10, E04H 9/14

(54) **BATARDEAU DE RIVAGE**
UFERHOCHWASSERSCHUTZWAND
RIVER BANK FLOOD BARRIER

(30) Priorité: 17.07.1995 FR 9508596
(43) Date de publication de la demande: 06.05.1998
(73) Titulaire: Sovran, Jean-Paul, 82000 Montauban (FR)
(72) Inventeur: Sovran, Jean-Paul, 82000 Montauban (FR)
(74) Mandataire: Tanguy, Gilbert André
(86) Numéro de dépôt international: FR9601094
(87) Numéro de publication internationale: WO97004177

(56) Documents cités:
- EP-A- 0 163 292
- DE-A- 2 158 977
- FR-A- 2 259 187
- NL-A- 9 201 601
- US-A- 2 315 516
- US-A- 5 118 217

## Description

L'invention se rapporte à un batardeau de rivage formant barrage provisoire, susceptible d'être élevé en quelques heures, par exemple le long d'un cours d'eau en crue, pour protéger un site inondable (voir p.ex. le NL-A-92 01 601).

En période de crue, on peut savoir, plusieurs heures à l'avance, si un cours d'eau va sortir de son lit et provoquer des inondations dans des zones habitées. L'invention permet de mettre à profit ce temps pour édifier un barrage provisoire appelé ici batardeau, dont l'infrastructure est déjà préétablie entre le cours d'eau et le site inondable.

Plus précisément, l'invention concerne donc un batardeau de rivage pour la prévention des inondations, comportant au moins une cavité (16, 16a) ménagée dans le sol à la frontière d'un site inondable et au moins des parties extractibles d'un barrage (15, 20a) installées dans de telles cavités, caractérisé en ce qu'il comporte une pluralité de piliers extractibles (15), chaque pilier étant installé dans une telle cavité, et des barrières étanches (20) montées et maintenues entre lesdits piliers.

Selon un mode de réalisation possible, on prévoit une pluralité de piliers extractibles, installés dans des cavités ménagées dans le sol à la frontière du site inondable et des barrières étanches démontables susceptibles d'être installées entre lesdits piliers lorsque ceux-ci sont élevés hors de leurs cavités respectives, au-dessus du niveau du sol.

Comme mentionné précédemment, l'ouvrage peut être édifié en bordure d'une rivière ou d'un fleuve mais aussi en bordure de mer pour protéger une lande ou une route, pendant les marées exceptionnelles.

Dans l'ouvrage décrit ci-dessus, chaque pilier comporte par exemple un tronçon métallique à profil en H formant une structure de maintien pour deux barrières précitées. Chaque barrière peut être, quant à elle, constituée d'un empilement de poutres métalliques et de lattes épaisses de matériau élastomère. Avantageusement, chaque poutre métallique a un profil en H et, de part et d'autre de l'âme centrale de cette poutre, sont encastrées une latte comportant une rainure longitudinale et une latte comportant une nervure longitudinale, ladite nervure et ladite rainure s'emboîtant respectivement dans une rainure et une nervure de deux autres lattes encastrées dans des poutres métalliques voisines. La barrière étanche peut donc ainsi être réalisée par l'empilement entre deux piliers de tels éléments constitués de poutres métalliques et de lattes de matériau élastomère. Ces éléments peuvent être stockés à proximité ou amenés par camion au moment de l'édification du batardeau.

En variante, les barrières installées entre les piliers extractibles peuvent être logées dans les tranchées pratiquées entre les cavités respectives des piliers.

L'invention sera mieux comprise et d'autres avantages de celle-ci apparaîtront plus clairement à la lumière de la description qui va suivre, donnée uniquement à titre d'exemple et faite en référence aux dessins annexés dans lesquels :
- la figure 1 est une vue partielle en perspective d'un batardeau conforme à l'invention, représenté en période d'utilisation ;
- la figure 2 est une vue de détail en perspective éclatée des principaux éléments d'un pilier extractible ;
- la figure 3 est une vue de détail en perspective éclatée d'un élément constitutif d'une barrière étanche destinée à être monté entre deux piliers extractibles ;
- la figure 4 est une vue de détail en perspective montrant de tels éléments sur le point d'être assemblés ; et
- la figure 5 est une vue analogue à la figure 1, illustrant une variante.

Le batardeau de rivage 11 selon un mode de réalisation possible de l'invention, constitue un barrage linéaire pouvant s'étendre sur plusieurs centaines de mètres, voire quelques kilomètres, le long d'un cours d'eau 12 sur la berge 13, pour protéger un site inondable, typiquement une zone habitée, en cas de crue importante dudit cours d'eau. La fonction de ce batardeau est donc de relever artificiellement le niveau de la berge pour éviter que le cours d'eau sorte de son lit.

Pour ce faire, une infrastructure escamotable est installée à demeure le long de la berge, c'est-à-dire plus généralement en bordure du site inondable. Cette infrastructure comporte une pluralité de piliers extractibles 15, disposés à intervalles réguliers, installés dans des cavités 16 respectives ménagées dans le sol à la frontière du site inondable, ici le long de la berge 13. Dans l'exemple, chaque cavité est constituée d'un fût cylindrique 17, ici métallique, scellé par du béton 18 dans un trou 19 vertical pratiqué dans le sol. Le fond du fût métallique est fermé. Son ouverture supérieure est au niveau du sol.

Des barrières étanches 20, démontables, sont susceptibles d'être installées entre lesdits piliers 15 lorsque ceux-ci sont dressés verticalement hors de leurs cavités 16 respectives, au-dessus du niveau du sol. Chaque pilier 15 est principalement constitué d'un tronçon à profil en H 22 dressé verticalement et formant une structure de maintien pour deux barrières 20 précitées, s'étendant de part et d'autre dudit tronçon. Les côtés parallèles du tronçon 22 sont disposés parallèlement à la berge. De cette façon, ledit tronçon forme une glissière recevant les extrémités de deux barrières. Dans le mode de réalisation décrit, la partie inférieure du pilier forme un piston 23 ajusté à la paroi intérieure du fût 17 et des moyens d'injection d'un fluide sous pression dans le fût sont prévus de façon que l'ensemble du fût et dudit piston constitue un vérin de levage du pilier extractible correspondant. Selon l'exemple, on a prévu un conduit 25 installé entre la surface et la partie inférieure du fût pour injecter l'air ou le fluide hydraulique sous pression, permettant d'extraire le pilier automatiquement et sans effort. Comme représenté, la partie inférieure du tronçon 22 est fixée, par exemple soudée, au piston 23. La surface latérale cylindrique de ce dernier est munie de joints d'étanchéité annulaires 26 en contact avec la paroi interne du fût. Un trou de manutention 27 est néanmoins prévu à la partie supérieure du tronçon métallique 22, pour le levage manuel du pilier au cas où aucune source de pression ne serait pas disponible. De plus, chaque tronçon métallique 22 comporte en partie haute, un moyen de fixation, constitué ici par une simple patte 29 soudée, munie d'un trou 30 tandis qu'un étai 32, par exemple constitué d'une simple tige métallique 34, est monté entre ce moyen de fixation et un sabot d'ancrage 36, ou structure analogue, scellé au sol en un point éloigné du fût de façon que ledit étai joue le rôle d'arc-boutant pour le pilier 15, lui permettant de résister à la poussée de l'eau. Dans l'exemple, la tige 34 comporte deux parties aux extrémités filetées, raccordées par un manchon taraudé, pour rendre sa longueur ajustable.

Le fût métallique 17 est muni d'une bride annulaire de fermeture 38, disposée au niveau du sol, sur laquelle est vissé un chapeau métallique 39. Ce dernier comporte une fente en H 42 servant de guide au tronçon métallique 22 et empêchant le piston 23 de s'échapper. Le chapeau est vissé sur la bride 38 avec interposition d'un joint plat 40 en matériau élastomère, pour l'étanchéité en position haute. Le joint 40 est comprimé entre le piston 23 et le chapeau 39. Cet agencement protège efficacement l'ensemble des éléments enterrés contre les infiltrations et évite donc la corrosion de ceux-ci.

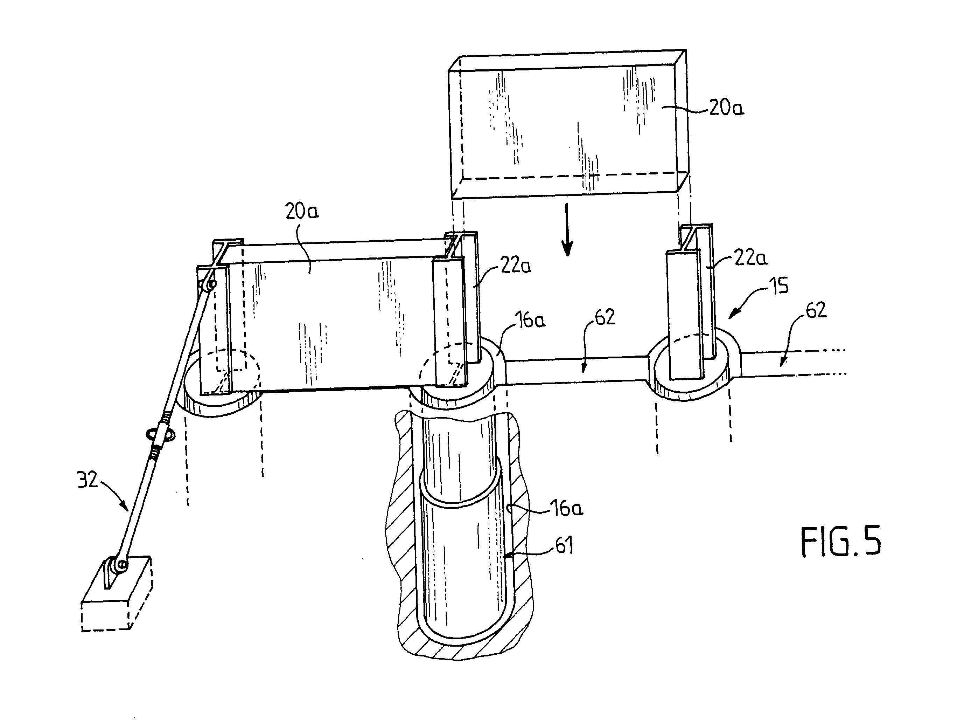

Un trou 45 est prévu à la partie inférieure du tronçon en H 22 au-dessus du piston 23, pour recevoir une goupille de blocage 46 permettant de maintenir le pilier 15 en position haute, après levage, lorsque la pression dans le vérin a été relâchée.
Par ailleurs, chaque barrière 20, c'est-à-dire la partie du batardeau édifiée entre deux piliers voisins, est avantageusement constituée d'un empilement de poutres métalliques 50 et de lattes 51, 52 de matériau élastomère. Plus précisément, chaque poutre métallique 50 a un profil en H et de part et d'autre de l'âme centrale de cette poutre, sont encastrées une latte 51 comportant une rainure longitudinale 54 et une latte 52 comportant une nervure longitudinale 55. La nervure et la rainure s'emboîtent respectivement dans une rainure et une nervure de deux autres lattes encastrées dans des poutres métalliques voisines. Les côtés de chaque tronçon métallique formant un pilier sont percés de trous 56, tandis que les poutres et les lattes comportent des trous correspondants de sorte que chaque élément tel que représenté à la figure 4 puisse être fixé aux piliers entre lesquels il est monté.

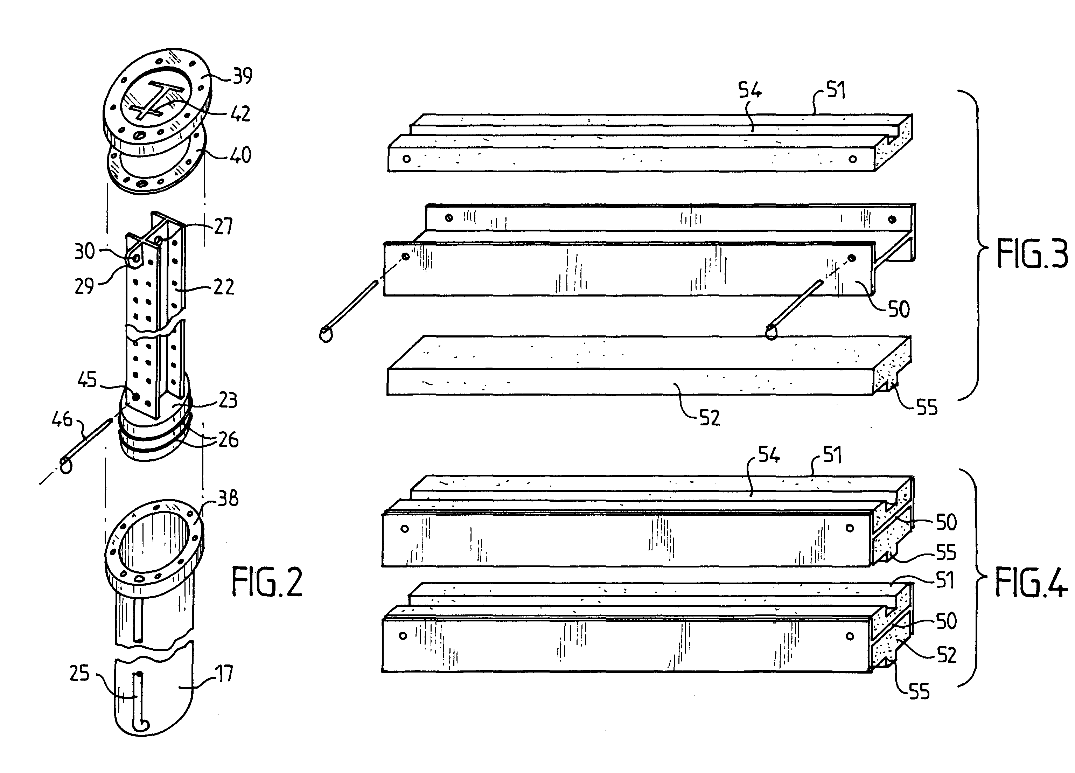

Le batardeau s'édifie dans les heures qui précèdent la crue. On procède au relevage des piliers comme indiqué ci-dessus, après avoir enlevé les chapeaux 39, par injection de fluide sous pression dans les vérins. Les tronçons métalliques à profils en H 22 sont ensuite bloqués en position haute grâce aux goupilles 46 et les tiges 34 sont fixées entre ces tronçons et les sabots d'ancrage 36. Les pièces constitutives des barrières sont ensuite empilées, comme représenté sur les figures 3 et 4, entre les glissières des tronçons 22.

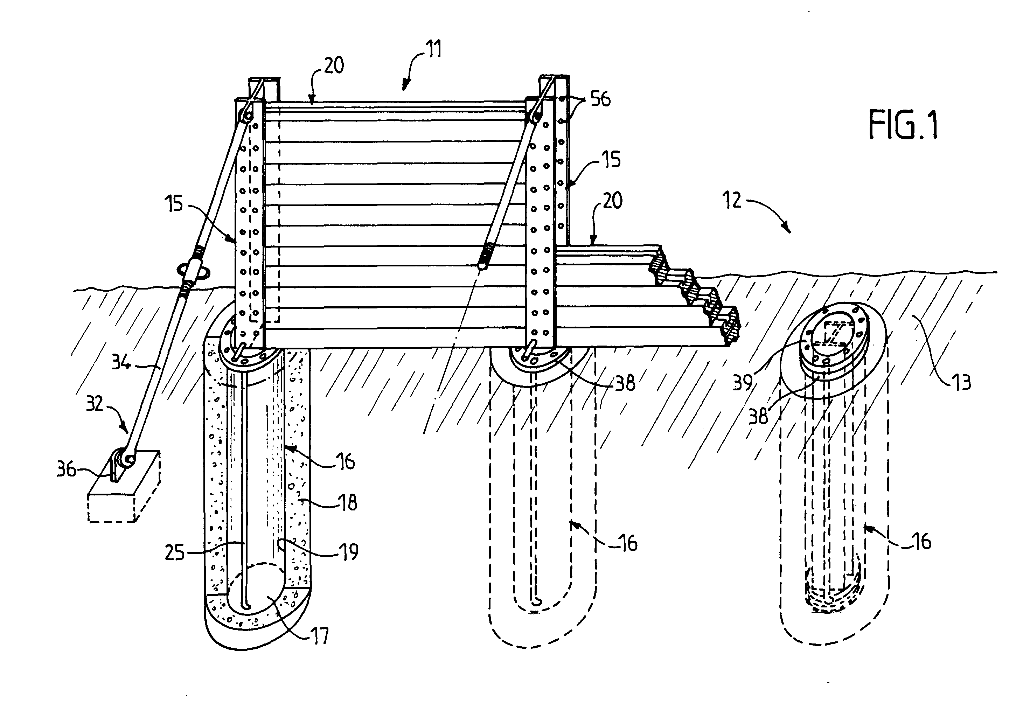

Sur la figure 5, les éléments de structure analogues portent les mêmes références numériques que sur la figure 1. On retrouve donc une pluralité de piliers extractibles 15, entre lesquels sont installées des barrières étanches 20a, chaque barrière étant ici d'un seul bloc. Comme dans l'exemple précédent, le pilier est constitué d'un tronçon 22a à profil en H monté sur un vérin 61 enterré. L'épaisseur d'une barrière 20a correspond à la distance séparant les deux ailes parallèles d'un tronçon à profil en H. Chaque vérin 61 est donc un vérin hydraulique à étage installé au fond d'une cavité cylindrique 16a correspondante, suffisamment profonde pour abriter le tronçon 22a lorsque le vérin est rétracté.

Sur chaque pilier, on retrouve le même système d'étai 32. Les barrières 20a peuvent être stockées à proximité, comme précédemment. Cependant, selon une caractéristique avantageuse, on creuse des tranchées 62 entre les cavités cylindriques 16a, chaque tranchée s'étendant d'une cavité à l'autre et abritant une barrière 20a en permanence, en dehors des périodes de mise en oeuvre. Ainsi, même en période de non utilisation, la barrière 20a reste installée entre deux tronçons 22a, la mise en service du batardeau est donc très rapide. Les opérations manuelles nécessaires se résument au montage des étais.

L'invention n'est pas limitée aux modes de réalisation décrites.

Notamment le système de la figure 5 peut être adapté pour que les barrières 20a soient préassemblées à des tronçons préfabriqués de caissons ouverts destinés à être enterrés pour former lesdites tranchées. Les caissons sont placés bout à bout entre les cavités des vérins.

## Revendications

1. Batardeau de rivage pour la prévention des inondations, comportant au moins une cavité (16, 16a) ménagée dans le sol à la frontière d'un site inondable et au moins des parties extractibles d'un barrage (15, 20a) installées dans de telles cavités, **caractérisé en ce qu'**il comporte une pluralité de piliers extractibles (15), chaque pilier étant installé dans une telle cavité, et des barrières étanches (20) montées et maintenues entre lesdits piliers.

2. Batardeau de rivage selon la revendication 1, **caractérisé en ce que** lesdites barrières étanches sont démontables et susceptibles d'être installées entre lesdits piliers lorsque ceux-ci sont élevés au-dessus du niveau du sol, hors de cavités (16) respectives.

3. Batardeau selon la revendication 2, **caractérisé en ce que** chaque cavité est constituée d'un fût (17) sensiblement cylindrique, **en ce que** la partie inférieure du pilier correspondant forme un piston (23) ajusté à la paroi intérieure dudit fût et **en ce que** des moyens d'injection d'un fluide sous pression dans ledit fût sont prévus de façon que l'ensemble dudit fût et dudit piston constitue un vérin de levage du pilier extractible correspondant.

4. Batardeau selon la revendication 3, **caractérisé en ce que** ledit piston comporte une surface cylindrique munie de joints d'étanchéité (26).

5. Batardeau selon l'une des revendications précédentes, **caractérisé en ce que** ledit pilier (15) comporte un tronçon métallique à profil en H (22) formant structure de maintien pour deux barrières (20) précitées.

6. Batardeau selon la revendication 4, **caractérisé en ce que** chaque tronçon métallique comporte en partie haute, un moyen de fixation (29) et **en ce qu'**un étai (32), tel que par exemple une tige métallique est monté entre ce moyen de fixation et un sabot d'ancrage (36) ou analogue scellé au sol.

7. Batardeau selon l'une des revendications précédentes, **caractérisé en ce que** chaque barrière est constituée d'un empilement de poutres métalliques (50) et de lattes épaisses (51, 52), par exemple en matériau élastomère.

8. Batardeau selon la revendication 7, **caractérisé en ce que** chaque poutre métallique a un profil en H et **en ce que**, de part et d'autre de l'âme centrale de cette poutre, sont encastrées une latte (51) comportant une rainure longitudinale (54) et une latte (52) comportant une nervure longitudinale (55), ladite nervure et ladite rainure s'emboîtant respectivement dans une rainure et une nervure de deux autres lattes encastrées dans des poutres voisines.

9. Batardeau selon la revendication 1, **caractérisé en ce que** chaque pilier extractible (15) comporte un tronçon à profil en H (22, 22a) monté sur un vérin (61) enterré.

10. Batardeau selon la revendication 9, **caractérisé en ce que** lesdites barrières étanches (20a) sont logées dans des tranchées (62) s'étendant entre lesdits piliers extractibles.

## Patentansprüche

1. Uferhochwasserschutzwand mit mindestens einer Vertiefung (16, 16a) im Boden an der Grenze zu einem überschwemmungsgefährdeten Gelände und mit mindestens Teilen einer Abdämmung (15, 20a), die ausziehbar sind und in diesen Vertiefungen angebracht wurden, **dadurch gekennzeichnet dass** sie mehrere ausziehbare Pfeiler (15) umfasst, wobei jeder Pfeiler in einer solchen Vertiefung angebracht ist, sowie undurchlässige Abdämmungen (20), die zwischen diesen Pfeilern montiert und festgehalten werden.

2. Uferhochwasserschutzwand nach Anspruch 1 **dadurch gekennzeichnet, dass** die undurchlässigen Abdämmungen demontierbar und dazu geeignet sind, zwischen den Pfeilern angebracht zu werden, wenn diese über Bodenhöhe und über die jeweiligen Vertiefungen (16) hinausgehoben werden.

3. Hochwasserschutzwand nach Anspruch 2 **dadurch gekennzeichnet, dass** jede Vertiefung aus einem Behälter (17) mit deutlich zylindrischer Form besteht, dass der untere Teil des Pfeilers einen Kolben (23) bildet, der der unteren Wand des genannten Behälters angepasst ist, und dass technische Mittel zur Einspritzung einer unter Druck stehenden Flüssigkeit in den Behälter vorgesehen sind, so dass die Einheit aus Behälter und Kolben einen Hubzylinder für den entsprechenden ausziehbaren Pfeiler bildet.

4. Hochwasserschutzwand nach Anspruch 3 **dadurch gekennzeichnet, dass** der Kolben eine zylindrische Oberfläche aufweist, die mit Dichtungsringen (26) versehen ist.

5. Hochwasserschutzwand nach einem der vorgenannten Ansprüche **dadurch gekennzeichnet, dass** der Pfeiler (15) einen Abschnitt aus Metall mit einem H-Profil (22) aufweist, der eine stabilisierende Struktur für die beiden genannten Abdämmungen (20) bildet.

6. Hochwasserschutzwand nach Anspruch 4 **dadurch gekennzeichnet, dass** jeder Abschnitt aus Metall in seinem oberen Teil ein Befestigungsmittel (29) aufweist und dass eine Stütze (32), wie z.B. eine Metallstrebe, zwischen diesem Befestigungsmittel und einem Verankerungsschuh (36) oder einem analogen im Boden verankerten technischen Mittel montiert wird.

7. Hochwasserschutzwand nach einem der vorgenannten Ansprüche **dadurch gekennzeichnet, dass** jede Abdämmung aus übereinandergestapelten Metallträgern (50) und dicken Latten (51,52), beispielsweise aus Elastomermaterial, besteht.

8. Hochwasserschutzwand nach Anspruch 7 **dadurch gekennzeichnet, dass** jeder Metallträger ein H-Profil aufweist, das zu beiden Seiten des mittleren Stegs des Trägers eine Latte (51) eingefügt ist, die eine längliche Rille (54) aufweist, und eine Latte (52), die eine längliche Rippe (55) aufweist, wobei die Rippe und die Rille jeweils in eine Rille und eine Rippe von zwei anderen Latten passen, die in danebenliegende Träger eingefügt sind.

9. Hochwasserschutzwand nach Anspruch 1 **dadurch gekennzeichnet, dass** jeder ausziehbare Pfeiler (15) einen Abschnitt mit H-Profil (22, 22a) umfasst, der auf einen unter der Erde befindlichen Zylinder (61) montiert ist.

10. Hochwasserschutzwand nach Anspruch 9 **dadurch gekennzeichnet, dass** die undurchlässigen Abdämmungen (20a) in Gräben (62) eingelassen sind, die sich zwischen den ausziehbaren Pfeilern erstrecken.

## Claims

1. A river bank flood barrier for flood prevention, containing at least one cavity (16, 16a), dug in the ground at the edge of a floodable site, and at least one of the extractable parts of a dam (15, 20a) installed in such cavities, **characterised in that** it contains several extractable pillars (15), each pillar being installed in such a cavity, and sealed barriers (20) mounted and maintained between the said pillars.

2. A river bank flood barrier in claim 1, **characterised in that** the said sealed barriers are able to be disassembled and can be installed between the said pillars when the latter are raised above ground level, out of respective cavities (16).

3. A flood barrier in claim 2, **characterised in that** each cavity consists of a shaft (17) of substantially cylindrical form, **in that** the lower part of the corresponding pillar forms a piston (23) adjusted to the inner wall of the said shaft, and **in that** means for injecting a pressurised fluid in the said shaft are designed such that the whole of the said shaft and the said piston constitutes a jack for lifting the corresponding extractable pillar.

4. A flood barrier in claim 3, **characterised in that** the said piston has a cylindrical surface fitted with sealing joints (26).

5. A flood barrier in one of the above claims, **characterised in that** the said pillar (15) contains a metal segment with an H profile (22) forming a maintenance structure for two abovementioned barriers (20).

6. A flood barrier in claim 4, **characterised in that** each metal segment contains in the upper part a mounting mechanism (29), and **in that** a prop (32), such as, for example, a metal rod, is mounted between this mounting mechanism and an anchoring shoe (36) or similar sealed to the ground.

7. A flood barrier in one of the above claims, **characterised in that** each barrier consists of a stack of metal beams (50) and thick laths (51, 52), made for example of elastomer material.

8. A flood barrier in claim 7, **characterised in that** each metal beam has an H profile and **in that**, either side of the central core of this beam, a lath (51) is embedded with a lengthways groove (54), and a lath (52) is embedded with a lengthways rib (55), which rib and which groove fit respectively into a groove and a rib of two other laths embedded in neighbouring beams.

9. A flood barrier in claim 1, **characterised in that** each extractable pillar (15) contains a segment with an H profile (22, 22a), mounted on a buried jack (61).

10. A flood barrier in claim 9, **characterised in that** the said sealed barriers (20a) are housed in trenches (62) extending between the said extractable pillars.
